# EUROPEAN PATENT APPLICATION

(11) **EP 3 156 879 A1**
(43) Date of publication of application: **19.04.2017**
(21) Application number: 15306628.7
(22) Date of filing: 14.10.2015
(51) Int. Cl.: G06F 3/01

(54) **HISTORICAL REPRESENTATION IN GAZE TRACKING INTERFACE**

(71) Applicant: Ecole Nationale de l'Aviation Civile, 31400 Toulouse Cedex (FR)
(72) Inventor: HURTER, Christophe, 31000 TOULOUSE (FR); BENHACENE, Raïlane, 31000 TOULOUSE (FR)
(74) Representative: Nguyen Van Yen, Christian

(57) **Abstract**

A graphical user interface supporting eye tracking is enriched with graphical representations of the degree of attention afforded respective areas of the user interface. These representations may comprise heatmaps, visual variable and the like. The generation of these representations may furthermore be used to adjust other user interface behaviour, for example by repositioning a mouse cursor to a part of the screen afforded greater protection. The attention information of a plurality of users may be compiled together and used to modify the graphical representation, providing each user with an indication of the focus of attention of their colleagues, thereby establishing a group awareness.

## Description

### Field of the invention

The present invention relates to graphical user interfaces supporting gaze tracking, and in particular representation of historical usage in such interfaces.

### Background of the invention

The information technology revolution that has taken place over the last fifty years or so has meant that many human activities now involve, and often revolve around, the manipulation of information technology systems, and in particular computers. The nature of the interfaces supporting these interactions has evolved continually in parallel with the processing and telecommunications capacities of these systems, from punch cards, keyboards, mouse driven graphical user interfaces and most recently multi-touch touch screen interfaces, the richness and accessibility of information displayed to a user has increased, and the precision and facility of interactions improved. Nevertheless, such operations have systematically remained based on manual interaction with the devices in question.

Meanwhile, human physiology dictates that an individual's eyes be directed at whatever is the object of their attention. In principle, this provides an intuitive and transparent mechanism for interfacing with computers. In practice however, such interfaces have proved difficult to implement, requiring expensive optical hardware, and imposing significant restraints on the freedom of movement of the user in order to maintain satisfactory performance. Nevertheless, advances in technology are increasingly making gaze tracking approaches feasible, particularly in situations where a user must monitor a large number of moving elements in the interface, over a long period and where the implications of a misinterpretation or failed manipulation of the interface in real time are sufficiently serious to justify the cost of such systems. Examples of such installations include air traffic control displays, head up displays in vehicles, and so on.

A known issue in gaze tracking interfaces is the so called "Midas effect", whereby a user's gaze tends to move continually within the interface, flitting from point to point, hovering around an area of interest yet darting back and fourth amongst points of secondary importance. In such an environment, the system is faced with a significant challenge in determining which point should be taken as the user's real focus of attention.

### Summary of the invention

In accordance with a first aspect, there is provided a method of managing a graphical user interface, said method comprising the steps of generating a graphical representation of the user interface, and displaying it. The point of regard of a user within the representation is monitored, and a record of the point of regard compiled over a duration. A modified graphical representation is generated to indicate the proportion of the duration for which the point of regard was directed at each point in the representation. The steps of monitoring, compiling and generating a modified graphical representation are repeated in an iterative cycle.

Generating a continuously updated representation of a user's point of attention enables the user himself or any other individual to whom the graphical representation may be presented, to perceive in real time how the user's attention is distributed across the components of the graphical representation. This can serve to highlight upcoming issues, supporting a more efficient distribution of effort and proactive management of problems. It may also support optimisations to the graphical user interface itself, with respect to the layout and presentation of icons, symbols and the like.

In accordance with a development of the first aspect, the method comprising the further step of adjusting behaviour of the graphical user interface as a function of the record.

The possibility of adjusting the behaviour in real time of the graphical user interface on the basis of recorded point of attention information opens up valuable synergies. So that the graphical user interface can seem to adapt to the user's work patterns, and anticipate his needs.

In accordance with a further development of the first aspect, the step of adjusting comprises repositioning a cursor to a position at which the point of regard was directed for a greater proportion of the duration.

Moving the mouse pointer for example towards the an area receiving a greater proportion of the user's attention means that the user will less often need to move the mouse by hand, and where he does so he will likely move it less far. This means that the user will be able to interact more rapidly and naturally with the interface, and furthermore will be less exposed to repetitive strain injuries and the like.

In accordance with a further development of the first aspect, the step of adjusting comprises repositioning a cursor to a position at which the point of regard was directed the greatest proportion of the duration.

Moving the mouse pointer for example to the current focus of the user's attention means that the user will less often need to move the mouse by hand, and where he does so he will likely move it less far. This means that the user will be able to interact more rapidly and naturally with the interface, and furthermore will be less exposed to repetitive strain injuries and the like.

In accordance with a further development of the first aspect, the step of adjusting comprises repositioning a cursor to the nearest position at which the point of regard was directed for a predetermined proportion of the duration.

Moving the mouse pointer for example towards the an area receiving a greater proportion of the user's attention means that the user will less often need to move the mouse by hand, and where he does so he will likely move it less far. This means that the user will be able to interact more rapidly and naturally with the interface, and furthermore will be less exposed to repetitive strain injuries and the like.

In accordance with a further development of the first aspect, the record is continually updated by discarding old data as new data are added, so that the total duration represented by the record remains substantially constant, and the graphical representation is continually modified to indicate the proportion of the duration for which the point of regard was directed at each point in the updated representation.

A rolling window ensures that the updated representation always reflects the situation with the same degree of actuality, and supports a weighted approach emphasising more recent changes. This renders the representation more representative of the current focus of the user's attention, and thus improves transparency and reliability.

In accordance with a further development of the first aspect, the step of modifying the graphical representation involves modifying the hue, colourfulness, chroma, saturation, lightness or brightness in accordance with a predefined scale reflecting the proportion of the duration for which the point of regard was directed at each point in the updated representation.

Modifying the hue, colourfulness, chroma, saturation, lightness or brightness in accordance with a predefined scale implements a heatmap type representation, which is an intuitive and rapidly assimilated manner of representing usage information, with a minimum degradation of the underlying graphical representation.

In accordance with a further development of the first aspect, the step of modifying the graphical representation involves adding or modifying visual marks in accordance with a predefined scale reflecting the proportion of said duration for which said point of regard was directed at each point in said updated representation.

Visual marks such as visual variables and the like are frequently used in certain implementations, and as such blend seamlessly into the representation already being managed.

In accordance with a further development of the first aspect, the point of regard is considered to have a predetermined influence radius in the representation, and the step of modifying the graphical representation comprises modifying not only each point of the representation corresponding to a recorded point of regard, but also neighbouring points insofar as they fall within the influence radius.

This approach will tend to blur out minor variations in point of regard, so that all instances of gazing at a particular general area will be counted together, even if the exact centre of the point of regard is different each time. As such, trivial variations are filtered out, leading to a generally more accurate representation of the user's attention. In embodiments where the user interface is modified on the basis of the record, this approach will avoid spurious or minimal modifications of the user interface, thereby reducing processing and memory access resource use.

In accordance with a further development of the first aspect, the respective points in the representation are associated with a predetermined capture radius in the representation and the step of modifying the graphical representation comprises modifying not only each point of the representation corresponding to a recorded point of regard, but also neighbouring points insofar as the point of regard falls within their respective capture radii.

This approach will tend to blur out minor variations in point of regard, so that all instances of gazing at a particular general area will be counted together, even if the exact centre of the point of regard is different each time. As such, trivial variations are filtered out, leading to a generally more accurate representation of the user's attention. In embodiments where the user interface is modified on the basis of the record, this approach will avoid spurious or minimal modifications of the user interface, thereby reducing processing and memory access resource use. Furthermore, this approach supports a weighting of respective areas of the graphical representation.

In accordance with a further development of the first aspect, the method comprises the further steps of detecting a user interaction requiring the rendering of a cursor in the representation, and determining the location within the representation as being the point at which the point of regard was directed for the highest proportion of the duration.

This embodiment introduces a new graphical user interface paradigm in which the cursor is not generally visible, but only rendered on demand, and a location determined to be optimal on the basis of the user's point of attention. By not generally rendering the cursor, graphical processing effort is reduced, and a visual distraction removed from the interface.

In accordance with a further development of the first aspect, the step of monitoring comprises monitoring a point of regard of a plurality of users within respective representations of the same space; and the step of compiling comprises compiling a record of the point of regard of each user over the duration, and the step of generating comprises generating a modified graphical representation to indicate the combined proportion of the duration for which each point of regard was directed at each point in said representation.

The combination of data from a plurality of users supports the creation of a shared awareness, where members of the group have some level of awareness of the focus of attention of their colleagues. This approach can be highly beneficial in facilitating the identification of arising issues of general concern, and managing the distribution of tasks amongst individuals.

In accordance with a second aspect, there is provided a computer program adapted to implement the steps of the first aspect.

In accordance with a third aspect, there is provided computer readable medium incorporating the computer program of the second aspect.

In accordance with a fourth aspect, there is provided an apparatus adapted generate a graphical representation of a user interface, and cause a display device to display said representation. The apparatus is further adapted to receive data from an eye tracking system indicating a point of regard. The apparatus further comprises storage for compiling a record of the point of regard over a duration, and is further adapted to modifying the graphical representation to indicate the proportion of the duration for which the point of regard was directed at each point in the representation.

Generating a continuously updated representation of a user's point of attention enables the user himself or any other individual to who the graphical representation may be presented, to perceive in real time how the user's attention is distributed across the components of the graphical representation. This can serve to highlight upcoming issues, supporting a more efficient distribution of effort and proactive management of problems. It may also support optimisations to the graphical user interface itself, with respect to the layout and presentation of icons, symbols and the like.

### Brief Description of the Drawings

The above and other advantages of the present invention will now be described with reference to the accompanying drawings, in which:
Figure 1 shows the steps of a method of managing a graphical user interface according to a first embodiment;
Figure 2 shows an iterative implementation of the steps described with reference to figure 1;
Figure 3 shows a further embodiment offering improved definition of the point of attention;
Figure 4 shows a first manner for moving a cursor with regard to the point of gaze record;
Figure 5 shows a second manner for moving a cursor with regard to the point of gaze record;
Figure 6 shows a third manner for moving a cursor with regard to the point of gaze record;
Figure 7 shows a generic computing system suitable for implementation of embodiments of the invention;
Figure 8 shows a smartphone device adaptable to constitute an embodiment;
Figure 9 shows a vehicle adaptable to constitute an embodiment; and
Figure 10 shows a computer device adaptable to constitute an embodiment.

### Detailed description

As mentioned above, gaze based user interfaces are particularly suited to applications where a user must track monitor a large number of moving elements in the interface, over a long period and where the implications of a misinterpretation of failed manipulation of the interface in real time are sufficiently serious to justify the cost of such systems, such as air traffic control displays, head up displays in vehicles, and so on. Often in such applications the user will need to move between a high level overview covering a large volume of space (which may be a representation of real space, or a virtual space existing only within the interface environment) or number of entities with minimal detail, and a more focussed view providing more detail on a selected volume of space, number of entities, etc.

Accordingly, while a mechanism for mouse based interfaces is well defined, this is not the case for gaze tracking interfaces. One particular difficulty arises due to the tendency for a user's regard to move continually within the interface, flitting from point to point, hovering around an area of interest yet darting back and fourth amongst points of secondary importance. In such an environment, the system is faced with a significant challenge in determining which point should be taken as the focal point for user actions.

Another particular difficulty arises from the fact that the contexts in which gaze based interfaces are particularly appropriate often lack fixed objects such as Icons etc. which can be considered as having focus, for example because any such objects may move quickly and unpredictably.

Eye tracking devices are mostly off-the-shelf products and need to be integrated in existing systems by the customers themselves. Such integration can be a problem especially when an existing environment such as a flight or drive simulator does not allow communication with third party software.

Finally, eye trackers produce large amounts of data which need to be stored and then processed. When eye tracking is used as a system input the data must be processed in real- or near real-time, thus adding further complications.

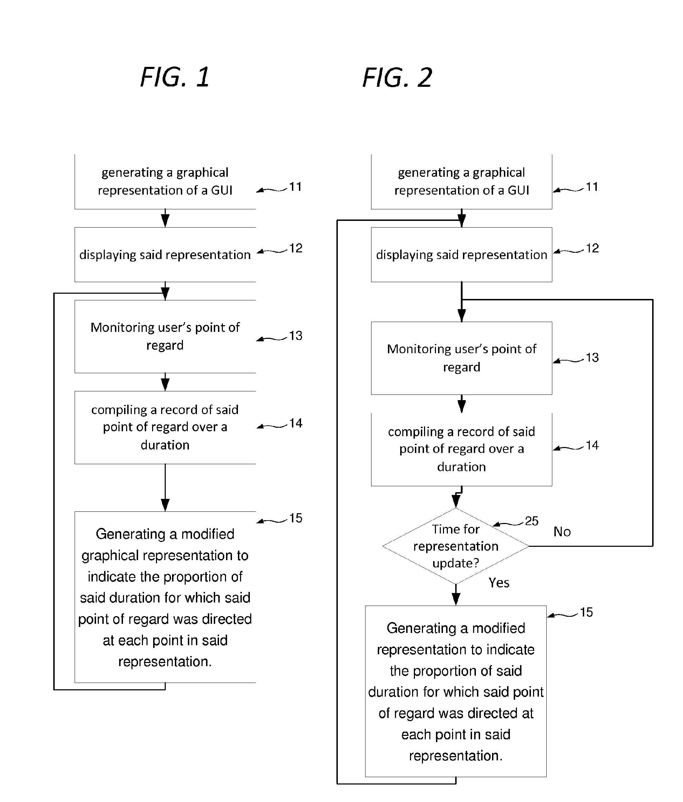

Figure 1 shows the steps of a method of managing a graphical user interface according to a first embodiment. As shown in figure 1 the method begins at step 11, at which a graphical representation of the user interface is generated, and then displayed at step 12. The method then monitors a user's point of regard within the representation at step 13.

Various systems are used to track eye movements, which may be adapted to implement this step. The setup can be head-mounted, table-based, or remote. These devices commonly use video-cameras and processing software to compute the gaze position from the pupil/corneal reflection of an infra-red emissive source. To increase data accuracy with table devices, it is possible to limit head movement with a fixed chin on the table. A calibration process is also common, to insure system accuracy. The calibration process usually consists of displaying several points in different locations of the viewing scene; the Eye Tracking software will compute a transformation that processes pupil position and head location. Table-based eye trackers are usually binocular and thus can calculate eye divergence and output raw coordinates of the Gaze Intersection Point (GIP) in x-y pixels applied to a screen in real-time. This feature allows integration of gaze position as an input for the human-machine interface (HMI). Areas of Interest (AOIs) are then defined to interact with the user. When the gaze meets an AOI an event is generated and a specific piece of information will be sent. When an AOI is an element of the interface with some degree of freedom (a scrollbar, for instance), one is talking about a dynamic AOI (dAOI). Tracking of a dAOI is more challenging compared to a static one.

In some embodiments the point of attention may simply be taken to be the instantaneous point of regard, that is, whatever point the eye tracking system considers the user to be looking at the instant the input is received at step 14. In other embodiments, the point of attention may take into account other factors such as system status, historical information and the like. In certain embodiments, the determination of the point of attention of the user may involve determining a weighted average of the users point of regard over a predetermined duration- further embodiments are described hereafter.

There are at least two kinds of Eye Tracking data collection methods. The first and the most common is to use the original software (for data recording and analysis) that is often provided by the device manufacturer. The second is to develop a specific software module (using a System Developer Kit (SDK), usually provided with the eye tracker) for data collection. Various parameters will impact the precision of raw data issued from the Eye Tracking system. Among them, the video frame rate and the camera resolution are critical for the Eye Tracking software. Existing systems use a video frame rate from 30 to 2000 Hz. For high precision Eye Tracking, a high frequency rate will improve data filtering but will also in-crease the data size and processing time which is critical for online processing.

Eye Tracking data collected during an experiment can be analyzed by statistical methods and visualization techniques to reveal characteristics of eye movements (fixations, hot spots, saccades, and scanpaths). Fixation, saccade, and smooth pursuit events can be computed from raw data coordinates. To correlate these pieces of information with the HMI, some interface-related data have to be collected (i.e. object coordinates within the interface, HMI events like mouse hover, etc.). This information can be used to infer the user behaviour:
- fixation (smooth pursuit) indicates visual encoding during overt orienting;
- saccade is the process of visual research when the focus of attention is shifted;
- number of fixations on a specific object is often an indicator of the importance attached to a specific object;
- mean fixation duration or total dwell time can be correlated to the visual demand induces by the design of an object or the associated task engagement.

Saccades are rapid eye movements that serve to change the point of fixation, and during which, as it is often considered, no information is encoded. Fixations occur when the user fixates an object (usually during a 150 ms threshold) and encodes relevant information. Sometimes shorter fixations are taken into account. Unlike long fixations that are considered to be a part of top-down visual processing, short ones are regarded as a part of a bottom-up process. It is estimated that 90% of viewing time is dedicated to fixations. Other complex ocular events like glissades or retro-saccades could be considered. There exist numerous algorithms of eye movement event detection. Still, there is no general standard for these algorithms. The blink duration and frequency can be used to assess cognitive workload, both of which can be collected with an eye-tracker. Variation of the pupil diameter can also be used as an indication of the cognitive workload, defined as task-evoked pupillary response (TEPR). However, light sources (environment, electronic displays, etc.) must be strictly controlled since the pupil light reflex is more pronounced than the impact of the cognition on pupil size. Moreover, even the luminance of the fixation area (even when the luminance of the computer screen does not change) has an impact on the pupil size. Scanpaths can also provide insight on HMI usage. In general, collected and cleaned data can be analyzed to infer causal links, statistics, and user behaviour. By considering these various factors, the system attempts to continuously maintain an indication of the point in the display which represents the users current focus.

A record of the point of regard is compiled over a duration at step 14. The duration in question may be any convenient window period. If the duration is too long there is a risk that obsolete data may continue to influence the information presented to the user, as well as requiring a large amount of storage space and representing a burden for continuous processing. On the other hand, if the period is too short, undue importance may be given to anomalous or unintentional movements. A duration of 150 to 600ms is typically considered to be statistically meaningful in some implementations, although in some cases the compilation of a meaningful record may take several seconds or even minutes.

At step 15 a new graphical representation is generated to indicate the proportion of the recorded duration for which the point of regard was directed at each point in the representation. In some embodiments this new graphical representation may be presented to the user, providing continuous feedback about the areas of most interest. In other embodiments the new representation may be presented to another user, providing a real time indication of the user's focus of attention.

The modification of the graphical representation may involve modifying the hue, colourfulness, chroma, saturation, lightness or brightness in accordance with a predefined scale reflecting the proportion of said duration for which said point of regard was directed at each point in said updated representation.

In some cases there may be defined a number of thresholds for different proportions of time for which the point of regard was directed at each point in the representation. Each threshold may be associate with a different combination of hue, transparency, colourfulness, chroma, saturation, lightness or brightness value. In some cases the sequence of thresholds may correspond to a respective incremental sequence of modifying the hue, colourfulness, chroma, saturation, lightness or brightness values, so that for example, the more time the point of regard is associated with a particular region, the brighter that zone may be, the higher the colour temperature of that region may be, etc.

The modification of the graphical representation may involve adding or modifying visual marks in accordance with a predefined scale reflecting the proportion of said duration for which said point of regard was directed at each point in said updated representation. Examples of such visual marks may be drawn for example from any of those described as "visual variables" in for example Bertin, J.: *Semiologie Graphique.* Paris: Editions Gauthier-Villars, and other works in this field. In particular, marks or symbols visible in the graphical representation, and variable in accordance with a predefined scale mapping the proportion of the duration for which the point of regard was directed at each point on one hand, to a respective set of characteristics such as, for example, one or more of the position, size, shape, orientation transparency, hue, colourfulness, chroma, saturation, lightness or brightness values.

In some embodiments, the manner in which the graphical representation is modified to indicate the proportion of the recorded duration for which the point of regard was directed at each point in the representation is selected in such a way as to avoid obscuring or otherwise degrading the information ordinarily conveyed by the user interface. For example, while the overall brightness or colour temperature of a particular region may be increased or decreased to indicate the proportion of the recorded duration for which the point of regard was directed at each point in the representation, the relative brightness or colour temperature of adjacent pixels may be maintained.

As shown, steps 13 to 15 are repeated iteratively, so that a real time representation of the users point of regard with respect to the GUI is continuously available. It will also be appreciated that steps 13 and 14 may be repeated iteratively, possibly as a sub loop within the greater loop of steps.

Accordingly, the steps of monitoring, compiling and generating a modified graphical representation are repeated in an iterative cycle. Any number of iterations may be performed. The iterations may be performed at a fixed or variable frequency, and pauses of fixed or variable duration may occur during iterations. These variations in frequency and pause duration may be dictated by available system resources, user activity level, the demands of other processes, the nature of the implementation itself or otherwise. Such pauses may occur at any point in the iterative cycle described above, and other processing activities relating to graphical processing or otherwise may occur in the intervening period.

Figure 2 shows an iterative implementation of the steps described with reference to figure 1. As shown in figure 2, steps 11, 12, 13 and 14 take place as described with reference to figure 1. After step 14, it is determined at step 25 whether it is time for the graphical representation to be updated. This may be the case if eye tracking data has been compiled indicating a large enough evolution in the proportion of the recorded duration for which the point of regard was directed at each point in the representation. This may also be the case if an event has occurred in the graphical user interface which may trigger a refresh anyway, or simply because a refresh is required on a regular basis. If it is determined at step 25 that a representation update is due, the method proceeds to step 15 as described above. Otherwise, the method loops back to step 13 as the method continues to monitor the point of regard and compile the record. Once the graphical representation is updated at step 15, the method loops back to step 12, where the updated graphical representation is displayed to the user. Accordingly, in this embodiment the modified graphical representation is displayed to the user himself- it will be appreciated that in other embodiments, this information may be displayed to another user.

Accordingly, the record is continually updated by discarding old data as new data are added, so that the total duration represented by said record remains substantially constant.

Furthermore, the graphical representation is continually modified to indicate the proportion of said duration for which said point of regard was directed at each point in said updated representation.

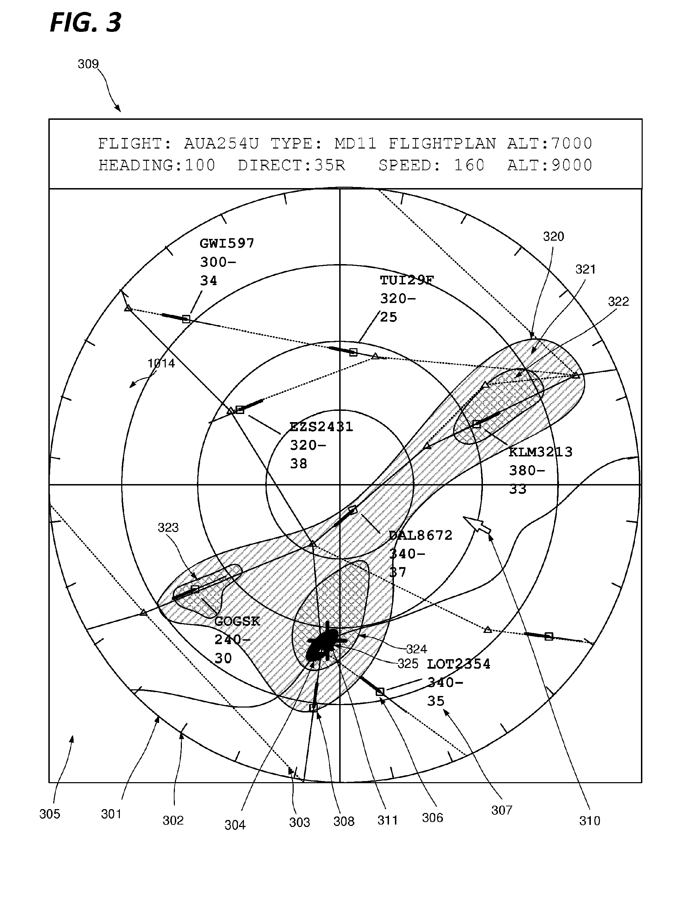

In embodiments where the recorded duration constitutes a rolling window as described above, whereby the record is continually updated with recent values, whilst the oldest values are discarded, the prominence given to each region may take into account not only the duration for which the instantaneous point of regard was located in that region, but also how recently that presence was recorded, so that more recent activity will be accorded more prominence than older activity. In some cases, a region may be given more prominence if it is in a defined proximity to other regions through which the point of regard has passed during the recorded duration, so as to further emphasise areas recording persistent activity at the expense of regions receiving only occasional or sporadic attention. Similarly, in some cases the instantaneous point of regard may be considered to have an area of effect greater in size than the recorded regions, so that a number of adjacent regions may record the presence of the instantaneous point of regard for any given instant. Still further, a greater weighting may be accorded regions closer to the centre of the adjacent regions. It will be appreciated that the areas need not be displayed to the user, but merely calculated as the basis of the definition of the most likely point of interest to the user. Any number of levels of duration of presence (represented by different degrees of shading in figure 3) may be defined, and the number of levels and/or the thresholds between levels may be varied dynamically depending on system conditions. The point of regard data of a plurality of users may be combined to define the point of attention for one or more of those users, or for another user.

The heat map may also be influenced by aspects of the underlying graphical user interface for example by assigning particular weightings to particular regions of the graphical representation, such that time spent by the point of regard on certain regions has a greater effect than in certain other regions, where the high weighting regions are for example those corresponding to the features, objects, entities or icons.

Similarly, different regions may have a capture radius, where certain regions only register the passage of the point of regard if it passes right over them, whilst other regions register the passage of the point of regard if it merely passes close by, where the greater capture radius regions are those corresponding to the features, objects, entities or icons. In other words, respective points in the representation may be associated with a predetermined capture radius in the representation, whereby the step of modifying the graphical representation comprises modifying not only each point of the representation corresponding to a recorded point of regard, but also neighbouring points insofar as said point of regard falls within their respective capture radii.

In another approach, the point of regard may be considered to have a predetermined influence radius in the representation, whereby the step of modifying the graphical representation comprises modifying not only each point of the representation corresponding to a recorded point of regard, but also neighbouring points insofar as they fall within said influence radius.

Still further, in some implementations, a plurality of users may be monitoring a corresponding space. This may relate for example to a real physical space reflected in the graphical representation. Where this is the case, point of regard information may be gathered for each of these users, and compiled into a single record at step 14 as described above. Accordingly, when the graphical representation is modified at step 15 the user will be presented with results based on the input of every user monitoring the space in question. By this means, a common awareness of issues can be maintained. In some cases, the attention of each particular user will be given a greater weighting in modifying the graphical representation of that respective user than that of the other users whose attention is taken into account, so that each user will see a different representation of the same information. Certain users (for example, the most skilled or senior) may be afforded a greater weighting, and corresponding influence on the graphical representation, than others. In some cases it may be desirable to superimpose a number of different modifications, for example superimposing (rather than combining) heat maps reflecting the activities of two groups of users.

These different approaches may be combined as desired to provide a complex modification algorithm taking into account the eye tracking and other information to highlight the areas likely to be of greatest interest to the user.

Figure 3 shows a further embodiment offering improved definition of the point of attention. As shown in figure 3, there is presented a circular perimeter 301 divided by a reticule whose centre corresponds to the centre of this circular region, which is centred on a point of interest which may be the location of the display itself, and hence the user of the display. The circular region is further more divided by three progressively smaller circles sharing the axis of the circular perimeter 301. This circle represents a substantially cylindrical volume of space in the real word, as projected on the underlying ground, and accordingly is associated with a scale. The diameter of the smallest circle is one quarter of the diameter of the circular perimeter, the diameter of the second smallest circle is half that of the circular perimeter, and the diameter of the largest circle is three quarters of the diameter of the circular perimeter, so that these circles can be used to determine the distance of any item on the display from the point of interest. The four axes of the reticule conventionally correspond to the cardinal points of the compass, and as shown the circular perimeter is additionally provided with markings indicating 10 degree increments around the perimeter, so that the bearing of any object on the display with respect to the point of interest may also readily be determined.

While the forgoing display features are generally static, there are furthermore shown a number of features that are dynamically generated. These include geographical features 305, representing for example features of the ground at the bottom of the volume under observation. Other features include predetermined flight paths 303 structured around way markers 304. Aircraft 306 are represented by small squares, and associated with lines indicating their current bearing. Information 307 associated with each plane is represented in the proximity of each aircraft. The graphical representation may be two or three dimensional.

The display shown in figure 3 constitutes part of a graphical user interface, which may permit the user to change the point of interest, or to obtain more information about a particular object shown in the representation. For example, where a user requires more detailed information about a particular aircraft, this may be selected as shown by the dark box 308, causing additional details associated with the same aircraft to be displayed in the box 309.

As shown, there is further provided a mouse cursor 310, which is directed by the user with a mouse or similar cursor control device and may be used to interact with the interface in a conventional manner.

As shown, there is further provided a gaze cursor 311. In many embodiments this gaze cursor may not be visible to the user, but it is shown here schematically to facilitate explanation. The gaze cursor reflects the position that the system currently considers to be the focus of the users gaze on the basis of the various considerations described above. It will be appreciated that the movement of the gaze cursor 311 is entirely independent of the movement of the mouse cursor 310.

Furthermore, as shown in figure 3 there is provided a shaded zone 320. As shown, the shaded zone incorporates 5 different areas, which are each shaded with one of three different levels of shading. Specifically, area 321 is lightly shaded, areas 322, 323 and 324 are heavily shaded, and zone 325 is black, furthermore, these areas are disposed in a hierarchical manner, so that heavy shaded areas are situated in the lightly shaded area, and the black area is situated in a heavily shaded area. This type of representation may be referred to a heat map. We may consider that if the graphical representation is divided into a plurality of regions, and that the location of the instantaneous point of regard in each of these regions is recorded as described with respect to steps 13 and 14 above, a graphical representation of the average presence in these regions as generated at step 15 describe above might look something like the zone 320, where the intensity of the shading represents the amount of the recorded duration that the point of regard was present in each region, whereby the darker the shading, the more time was spent in the area in question.

In accordance with certain further embodiments, a behaviour of the graphical user interface may be adjusted as a function of the record. For example, a cursor, such the mouse pointer 310, may be moved to a position at which said point of regard has been directed for a greater proportion of the monitoring duration.

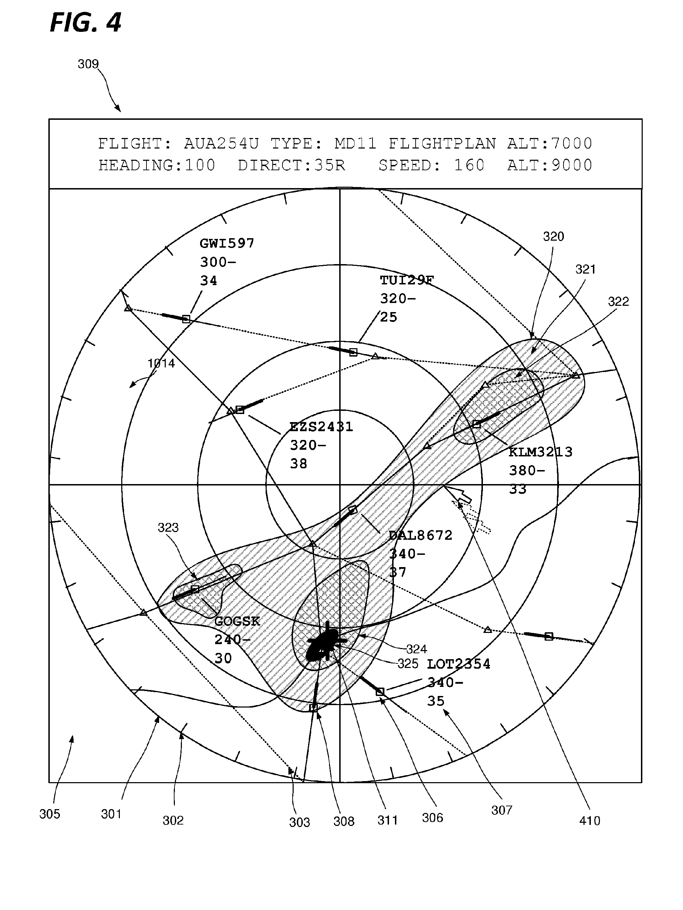

Figure 4 shows a first manner for moving a cursor with regard to the point of gaze record. Figure 4 is similar to figure 3, and comprises the same elements 301, 302, 303, 305, 306, 306, 307, 308, 309 as described above. As shown, the mouse cursor 310 has moved to a new position designated by mouse cursor 410. In accordance with this embodiment, the mouse pointer 310, has been moved to a position 410 at which the point of regard has been directed for a greater proportion of the monitoring duration, as compared to the amount of time spent over the original position 310, as indicated by the heat map 320, which has no shading for the original position 310. More specifically, the new position is the nearest point to the original position where the first shading threshold is reached. As a variant of this approach, the cursor may be repositioned to the nearest position at which said point of regard was directed for a predetermined proportion of said duration.

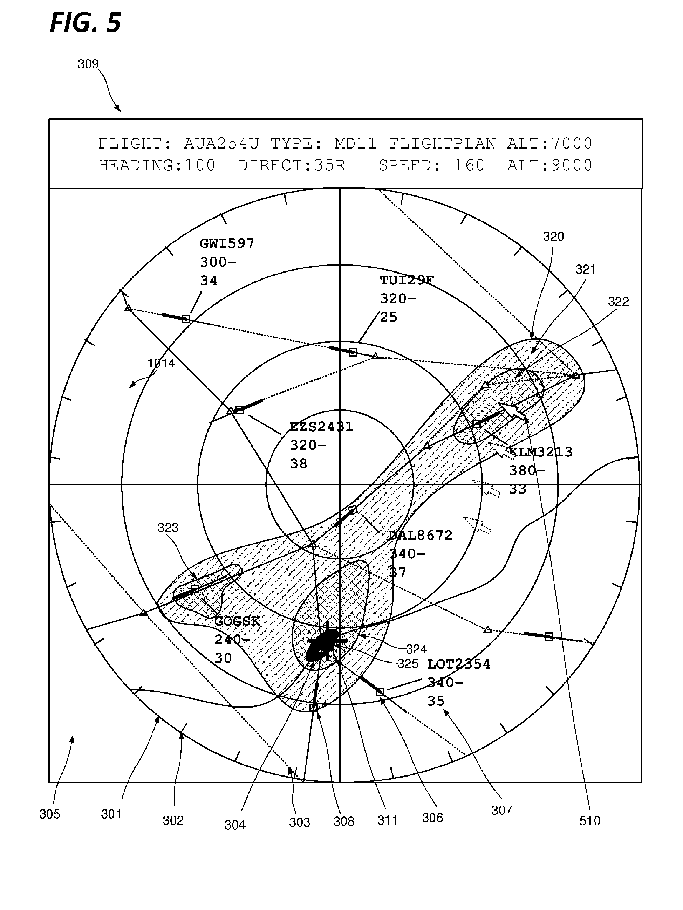

Figure 5 shows a second manner for moving a cursor with regard to the point of gaze record. Figure 5 is similar to figure 3, and comprises the same elements 301, 302, 303, 305, 306, 306, 307, 308, 309 as described above. As shown, the mouse cursor 310 has moved to a new position designated by mouse cursor 510. In accordance with this embodiment, the mouse pointer 310, has been moved to a position 510 at which the point of regard has been directed for a greater proportion of the monitoring duration, as compared to the amount of time spent over the original position 310, as indicated by the heat map 320, which has no shading for the original position 310. More specifically, the new position is the peak of activity closest to the original position.

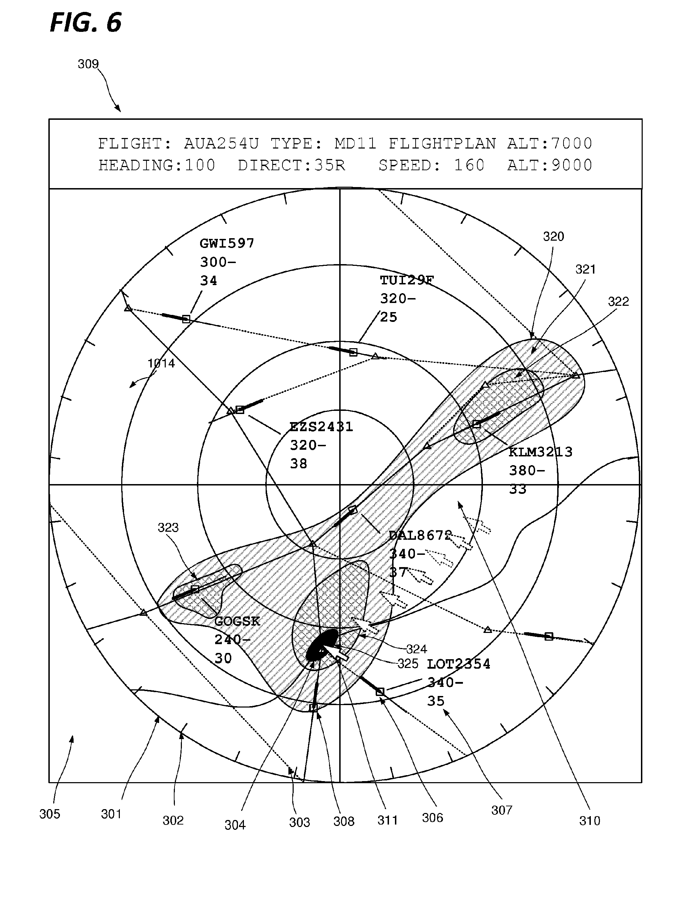

Figure 6 shows a third manner for moving a cursor with regard to the point of gaze record. Figure 6 is similar to figure 3, and comprises the same elements 301, 302, 303, 305, 306, 306, 307, 308, 309 as described above. As shown, the mouse cursor 310 has moved to a new position designated by mouse cursor 610. In accordance with this embodiment, the mouse pointer 310 has been moved to a position 610 at which the point of regard has been directed for a greater proportion of the monitoring duration, as compared to the amount of time spent over the original position 310, as indicated by the heat map 320, which has no shading for the original position 310. More specifically, the new position is the point in the entire graphical representation having the highest level of activity, or in other words the position to which the point of regard was directed for the greatest proportion of the duration.

In certain variants, for example based on any of the embodiments of figures 3, 4, 5 or 6, the cursor 310 may be invisible until a user interaction requiring the rendering of a cursor (such as moving the mouse) in said representation is detected, whereupon the cursor is rendered at a position determined as described above. In other words, the mouse cursor automatically appears where it is most likely to be needed.

In certain embodiments there is provided a graphical user interface supporting eye tracking enriched with graphical representations of the degree of attention afforded respective areas of the user interface. These representations may comprise heatmaps, visual variable and the like. The generation of these representations may furthermore be used to adjust other user interface behaviour, for example by repositioning a mouse cursor to a part of the screen afforded greater protection. The attention information of a plurality of users may be compiled together and used to modify the graphical representation, providing each user with an indication of the focus of attention of their colleagues, thereby establishing a group awareness.

The disclosed methods can take form of an entirely hardware embodiment (e.g. FPGA), an entirely software embodiment (for example to control a system according to the invention) or an embodiment containing both hardware and software elements. Software embodiments include but are not limited to firmware, resident software, microcode, etc. The invention can take the form of a computer program product accessible from a computer-usable or computer-readable medium providing program code for use by or in connection with a computer or an instruction execution system. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

In some embodiments, the methods and processes described herein may be implemented in whole or part by a user device. These methods and processes may be implemented by computer-application programs or services, an application-programming interface (API), a library, and/or other computer-program product, or any combination of such entities.

The user device may be a mobile device such as a smart phone or tablet, a computer or any other device with processing capability, such as a robot or other connected device.

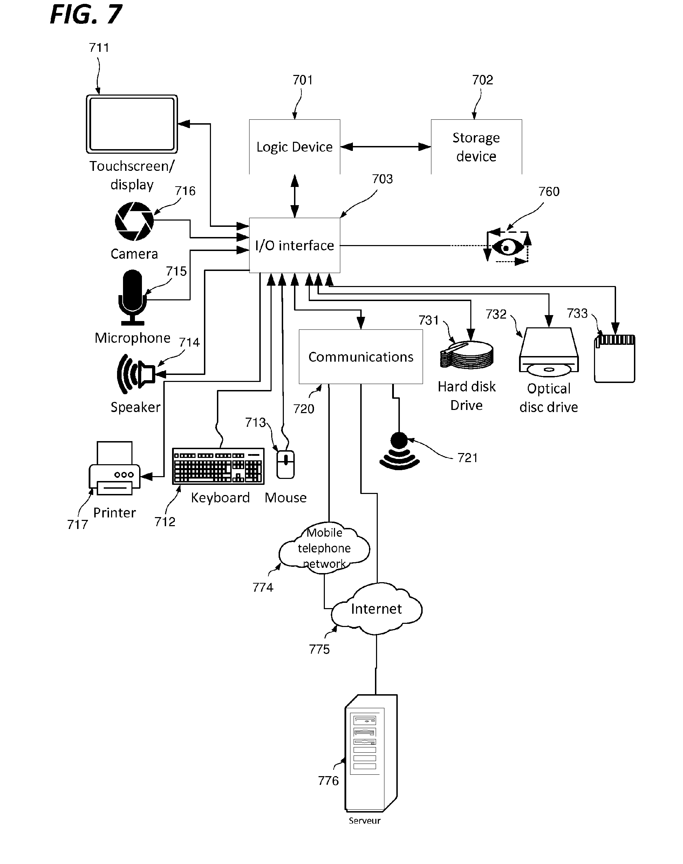

Figure 7 shows a generic computing system suitable for implementation of embodiments of the invention.

A shown in figure 7, a system includes a logic device 701 and a storage device 702. The system may optionally include a display subsystem 711, input subsystem 712, 713, 714 , communication subsystem 720, and/or other components not shown.

Logic device 701 includes one or more physical devices configured to execute instructions. For example, the logic device 701 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic device 701 may include one or more processors configured to execute software instructions. Additionally or alternatively, the logic device may include one or more hardware or firmware logic devices configured to execute hardware or firmware instructions. Processors of the logic device may be single-core or multi-core, and the instructions executed thereon may be configured for sequential, parallel, and/or distributed processing. Individual components of the logic device 701 optionally may be distributed among two or more separate devices, which may be remotely located and/or configured for coordinated processing. Aspects of the logic device 701 may be virtualized and executed by remotely accessible, networked computing devices configured in a cloud-computing configuration.

Storage device 702 includes one or more physical devices configured to hold instructions executable by the logic device to implement the methods and processes described herein. When such methods and processes are implemented, the state of storage 702 device may be transformed e.g., to hold different data.

Storage device 702 may include removable and/or built-in devices. Storage device 702 may comprise one or more types of storage device including optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage device may include volatile, nonvolatile, dynamic, static, read/write, read-only, random-access, sequential-access, location-addressable, file-addressable, and/or content-addressable devices.

In certain arrangements, the system may comprise an interface 703 adapted to support communications between the Logic device 701 and further system components. For example, additional system components may comprise removable and/or built-in extended storage devices. Extended storage devices may comprise one or more types of storage device including optical memory 732 (e.g., CD, DVD, HD-DVD, Blu-Ray Disc, etc.), semiconductor memory 733 (e.g., RAM, EPROM, EEPROM, FLASH etc.), and/or magnetic memory 731 (e.g., hard-disk drive, floppy-disk drive, tape drive, MRAM, etc.), among others. Such extended storage device may include volatile, nonvolatile, dynamic, static, read/write, read-only, random-access, sequential-access, location-addressable, file-addressable, and/or content-addressable devices.

It will be appreciated that storage device includes one or more physical devices, and excludes propagating signals per se. However, aspects of the instructions described herein alternatively may be propagated by a communication medium (e.g., an electromagnetic signal, an optical signal, etc.), as opposed to being stored on a storage device.

Aspects of logic device 701 and storage device 702 may be integrated together into one or more hardware-logic components. Such hardware-logic components may include field-programmable gate arrays (FPGAs), program- and application-specific integrated circuits (PASIC/ASICs), program- and application-specific standard products (PSSP/ASSPs), system-on-a-chip (SOC), and complex programmable logic devices (CPLDs), for example.

The term "program" may be used to describe an aspect of computing system implemented to perform a particular function. In some cases, a program may be instantiated via logic device executing machine-readable instructions held by storage device. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc.

In particular, the system of figure 7 may be used to implement embodiments of the invention.

For example a program implementing the steps described with respect to figure 1 may be stored in storage device 702 and executed by logic device 701. Data used for the creation of the graphical representation of the selected space may be stored in storage 702 or the extended storage devices 732, 733 or 731. The Logic device may use data received from the camera 716 or eye tracking system 760 to determine the instantaneous point of regard, and the display 711 used to display the graphical representation.

Accordingly the invention may be embodied in the form of a computer program.

Furthermore, when suitably configured and connected, the elements of figure 7 may constitute an apparatus adapted to generate a graphical representation of a user interface, and cause a display device to display said representation; this apparatus may further be adapted to receive data from an eye tracking system indicating a point of regard. The apparatus may comprise storage for compiling a record of the point of regard over a duration, and the apparatus may further be adapted to modify the graphical representation to indicate the proportion of the duration for which said point of regard was directed at each point in said representation.

It will be appreciated that a "service", as used herein, is an application program executable across multiple user sessions. A service may be available to one or more system components, programs, and/or other services. In some implementations, a service may run on one or more server-computing devices.

When included, display subsystem 711 may be used to present a visual representation of data held by storage device. This visual representation may take the form of a graphical user interface (GUI). As the herein described methods and processes change the data held by the storage device 702, and thus transform the state of the storage device 702, the state of display subsystem 711 may likewise be transformed to visually represent changes in the underlying data. Display subsystem 711 may include one or more display devices utilizing virtually any type of technology. Such display devices may be combined with logic device and/or storage device in a shared enclosure, or such display devices may be peripheral display devices.

When included, input subsystem may comprise or interface with one or more user-input devices such as a keyboard 712, mouse 711, touch screen 711, or game controller (not shown). In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, colour, stereoscopic, and/or depth camera for machine vision and/or gesture recognition; a head tracker, eye tracker 760, accelerometer, and/or gyroscope for motion detection and/or intent recognition; as well as electric-field sensing componentry for assessing brain activity.

When included, communication subsystem 720 may be configured to communicatively couple computing system with one or more other computing devices. For example, communication module of may communicatively couple computing device to remote service hosted for example on a remote server 776 via a network of any size including for example a personal area network, local area network, wide area network, or the internet. Communication subsystem may include wired and/or wireless communication devices compatible with one or more different communication protocols. As non-limiting examples, the communication subsystem may be configured for communication via a wireless telephone network 774, or a wired or wireless local- or wide-area network. In some embodiments, the communication subsystem may allow computing system to send and/or receive messages to and/or from other devices via a network such as the Internet 775. The communications subsystem may additionally support short range inductive communications 721 with passive devices (NFC, RFID etc).

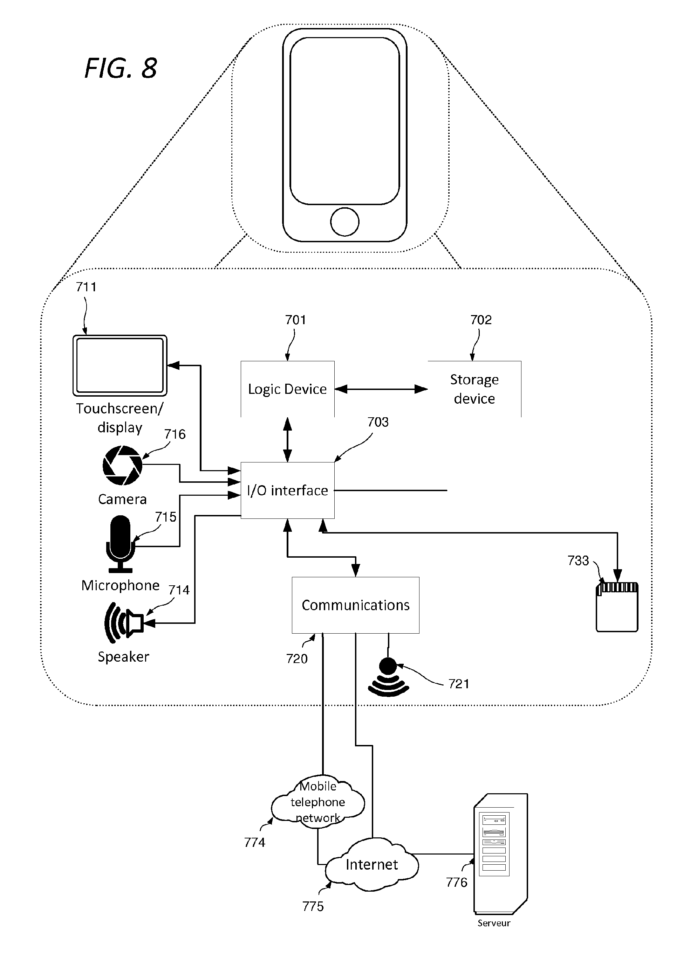

The system of figure 7 is intended to reflect a broad range of different types of information handling system. It will be appreciated that many of the subsystems and features described with respect to figure 7 are not required for implementation of the invention, but are included to reflect possible systems in accordance with the present invention. It will be appreciated that system architectures vary widely, and the relationship between the different sub-systems of figure 4 is merely schematic, and is likely to vary in terms of layout and the distribution of roles in systems. It will be appreciated that, in practice, systems are likely to incorporate different subsets of the various features and subsystems described with respect to figure 7. Figures 8, 9 and 10 disclose further example devices in accordance with the present invention. Those of ordinary skill in the art will appreciate that systems may be employed in the future which also operate in accordance with the present invention.

Figure 8 shows a smartphone device adaptable to constitute an embodiment. As shown in figure 8, the smartphone device incorporates elements 701, 702, 703, 720, 733, 714, 715, 716, 711 as described above. It is in communication with the telephone network 774 and a server 776 via the network 775. On the other hand, elements 731, 732, 717, 712, 713 are omitted. The features disclosed in this figure may also be included within a tablet device as well. In this embodiment, the dedicated eye tracking hardware 760 is omitted, and the device depends on the camera 716 with suitable software, for determining the point of regard.

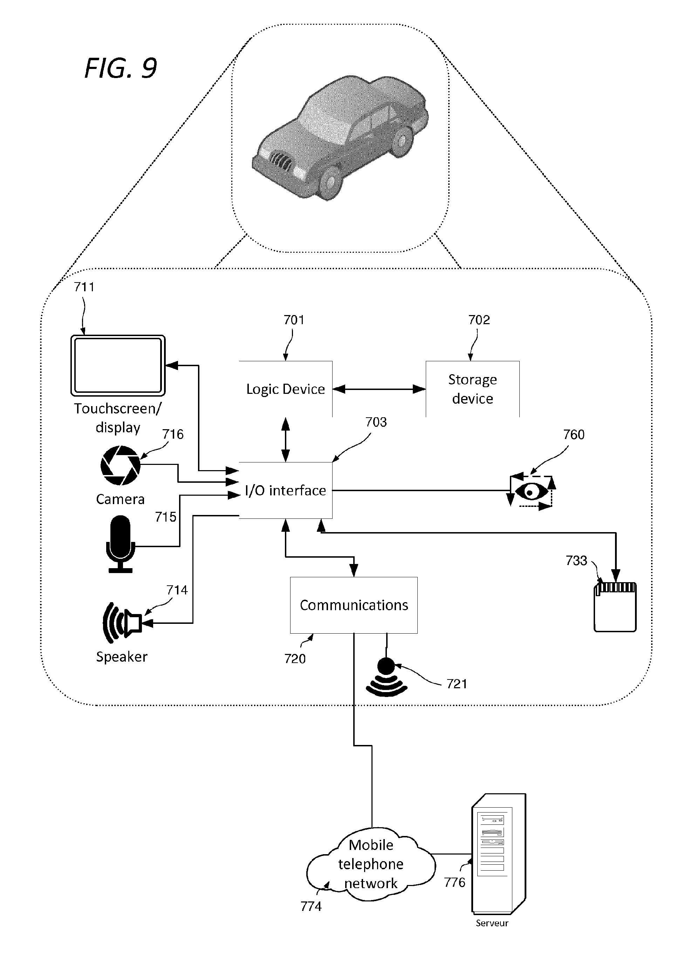

Figure 9 shows a vehicle adaptable to constitute an embodiment. As shown in figure 9, the vehicle comprises elements 701, 702, 703, 720, 721, 733, 714, 715, 716, 760 and 721 as described above. It may be in communication with a server 776 via the mobile telephone network 774. On the other hand, elements 731, 732, 716, 717, 712, 713 and 775 are omitted.

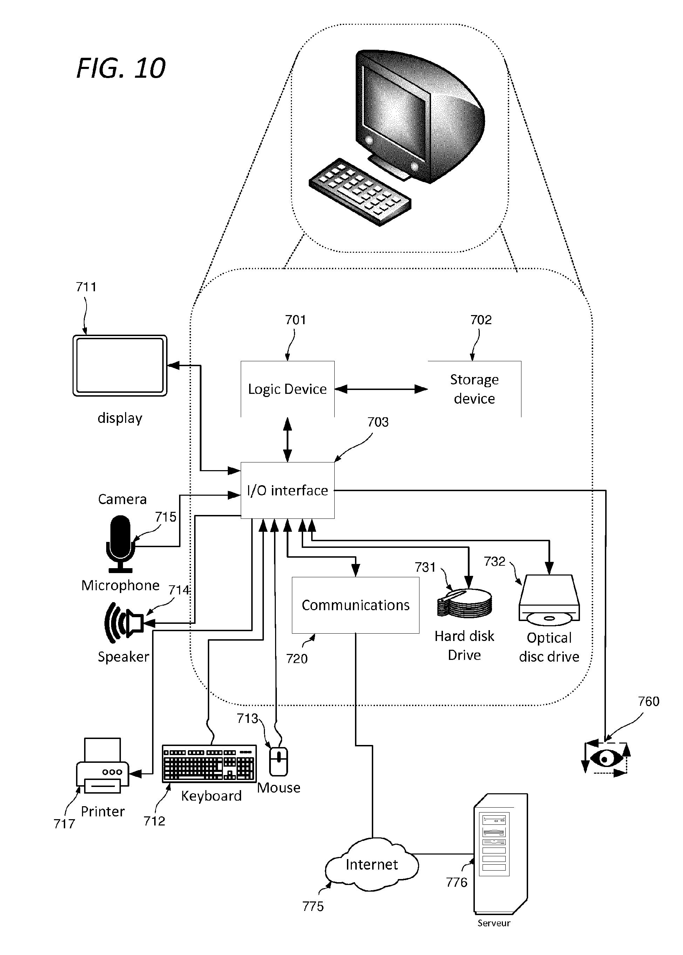

Figure 10 shows a computer device adaptable to constitute an embodiment. As shown in figure 10, the computer device incorporates elements 701, 702, 703, 720, 730, 731, 732, as described above. It is in communication with elements 714, 715, 717, 712, 760 and 713 as peripheral devices which may also be incorporated in the same computer device, and with a server 776 via the network 775. On the other hand, elements 733, 721 and 774 are omitted, and element 711 is an ordinary display with or without touchscreen functionality.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A method of managing a graphical user interface, said method comprising the steps of:
generating a graphical representation of said user interface, and displaying said representation;
monitoring a point of regard of a user within said representation;
compiling a record of said point of regard over a duration;
generating a modified graphical representation to indicate the proportion of said duration for which said point of regard was directed at each point in said representation,
wherein said steps of monitoring, compiling and generating a modified graphical representation are repeated in an iterative cycle.

2. The method of claim 1 comprising the further step of adjusting behaviour of said graphical user interface as a function of said record.

3. The method of claim 2 wherein said step of adjusting comprises repositioning a cursor to a position at which said point of regard was directed for a greater proportion of said duration.

4. The method of claim 3 wherein said step of adjusting comprises repositioning a cursor to a position at which said point of regard was directed the greatest proportion of said duration.

5. The method of claim 3 wherein said step of adjusting comprises repositioning a cursor to the nearest position at which said point of regard was directed for a predetermined proportion of said duration.

6. The method of any preceding claim wherein said record is continually updated by discarding old data as new data are added, so that the total duration represented by said record remains substantially constant, and continually modifying said graphical representation to indicate the proportion of said duration for which said point of regard was directed at each point in said updated representation.

7. The method of any preceding claim wherein said step of modifying said graphical representation involves modifying the hue, colourfulness, chroma, saturation, lightness or brightness in accordance with a predefined scale reflecting the proportion of said duration for which said point of regard was directed at each point in said updated representation.

8. The method of any preceding claim wherein said step of modifying said graphical representation involves adding or modifying visual marks in accordance with a predefined scale reflecting the proportion of said duration for which said point of regard was directed at each point in said updated representation.

9. The method of any preceding claim wherein said point of regard is considered to have a predetermined influence radius in said representation, and whereby said step of modifying said graphical representation comprises modifying not only each point of said representation corresponding to a recorded point of regard, but also neighbouring points insofar as they fall within said influence radius.

10. The method of any preceding claim wherein respective points in said representation are associated with a predetermined capture radius in said representation, and whereby said step of modifying said graphical representation comprises modifying not only each point of said representation corresponding to a recorded point of regard, but also neighbouring points insofar as said point of regard falls within their respective capture radii.

11. The method of any preceding claim comprising the further steps of detecting a user interaction requiring the rendering of a cursor in said representation, and determining the location within said representation as being the point at which said point of regard was directed for the highest proportion of said duration.

12. The method of any preceding claim wherein said step of monitoring comprises monitoring a point of regard of a plurality of users within respective representations of the same space; and wherein said step of compiling comprises compiling a record of the point of regard of each said user over said duration, and said step of generating comprises generating a modified graphical representation to indicate the combined proportion of said duration for which each point of regard was directed at each point in said representation.

13. A computer program adapted to implement the steps of any of claims 1 to 12.

14. A computer readable medium incorporating the computer program of claim 13.

15. An apparatus adapted to generate a graphical representation of a user interface, and cause a display device to display said representation;
said apparatus further adapted to receive data from an eye tracking system indicating a point of regard,
said apparatus comprising storage for compiling a record of said point of regard over a duration;
said apparatus further being adapted to modify said graphical representation to indicate the proportion of said duration for which said point of regard was directed at each point in said representation.
